# EUROPEAN PATENT APPLICATION

(11) **EP 1 017 151 A2**
(43) Date of publication of application: **05.07.2000**
(21) Application number: 99204361.2
(22) Date of filing: 16.12.1999
(51) Int. Cl.: H02K 1/12

(54) **Stator for high-speed radial flux machines**

(30) Priority: 30.12.1998 IT MI982859
(71) Applicant: ABB Research Ltd., 8050 Zürich (CH)
(72) Inventor: Piero, Bodini, 20010 Vittuone, MI (IT); Garavaglia, Marcello, 20100 Milano (IT); Malfa, Enrico, 24059 Zanica, BG (IT); Secondo, Giulio, 16122 Genova (IT)
(74) Representative: Giavarini, Francesco

(57) **Abstract**

A stator for high-speed radial-flux electrical machines, comprising a core and associated windings, wherein the core is formed by a plurality of toroidal elements which are arranged axially side by side and are mutually spaced.

## Description

The present invention relates to a stator for high-speed radial-flux machines. More particularly, the invention relates to a stator for high-speed radial-flux machines having extremely low core losses.

It is known that radial-flux machines are the most widely used category of electric motor and are substantially provided by means of ferromagnetic materials which are laminated, stacked or punched or, for special applications, shaped by means of other technologies such as laser cutting, cutting with high-pressure water jets, etcetera.

Stator assemblies are therefore generally formed by punching and stacking metal laminations. Electrical machines such as permanent-magnet motors are also known in which the stator body is made of materials such as soft ferrite in order to form a stator without grooves, but ferrite is a highly unstable material and therefore the motor must have special characteristics in order to increase the frequency so that it operates correctly. In this regard, six poles are required in order to be able to increase the frequency, and this severely limits either the maximum rotation rate of the motor or its power.

Another type of stator body devised in order to reduce losses in the iron entails using amorphous iron, but this solution limits the size of the motor to very small machines. The lamina of amorphous material used to provide the stator body, by packing laminations formed in this manner, has a maximum possible width which is limited by production difficulties and this therefore limits the dimensions of the motor.

The use of low-loss materials is also known in order to provide monolithic stators with laminations which, however, are not perpendicular but parallel to the generated currents, accordingly producing parasitic currents.

To summarize, in order to have stators made of low-loss materials, such as for example amorphous iron or ferrites or other materials such as nanocrystalline iron, the above-described methods for providing the stator body do not yield satisfactory results.

The aim of the present invention is to provide a stator for high-speed radial-flux electrical machine in which losses in the stator core are minimal.

Within the scope of this aim, an object of the present invention is to provide a stator for high-speed radial-flux electrical machines in which it is possible to implement highly effective cooling systems.

Another object of the present invention is to provide a stator for high-speed radial-flux electrical machines in which the stator core and the associated windings have high mechanical strength.

Another object of the present invention is to provide a stator for high-speed radial-flux electrical machines in which the dimensions of the stator are not limited by constructive difficulties linked to the types of material used.

Another object of the present invention is to provide a stator for high-speed radial-flux electrical machines which is highly reliable, relatively easy to manufacture and at competitive costs.

This aim, these objects and others which will become apparent hereinafter are achieved by a stator for high-speed radial-flux electrical machines, comprising a core and associated windings, characterized in that said core comprises a plurality of toroidal elements which are arranged axially side by side and are mutually spaced.

Further characteristics and advantages of the present invention will become apparent from the following detailed description of preferred but not exclusive embodiments of the stator according to the present invention, illustrated only by way of non-limitative example in the accompanying drawings, wherein:
Figure 1 is a partial schematic perspective view of the core of a stator provided according to the present invention;
Figure 2 is a schematic sectional view, taken along a transverse plane, of the stator according to the present invention;
Figure 3 is an axial view of the stator core and of the associated primary cooling system;
Figure 4 is a plan view of the stator core and of the associated secondary cooling system;
Figure 5 is a plan view of the stator core and of the associated tertiary cooling system; and
Figure 6 is a sectional view, taken along a transverse plane, of the stator core with the associated tertiary cooling circuit.

With reference to the above figures, the stator according to the present invention comprises a core 1 which is constituted by a plurality of mutually spaced toroidal elements 2, each constituted, for example, by a toroidally laminated very low-loss magnetic material. A preferred material can be a NiFe alloy with a Ni percentage between 35 and 50%. As an alternative, the material can be a so-called nanocrystalline iron or amorphous iron or in any case any other low-loss ferromagnetic material, such as for example compressed powders known by the technical term "soft magnetic composter".

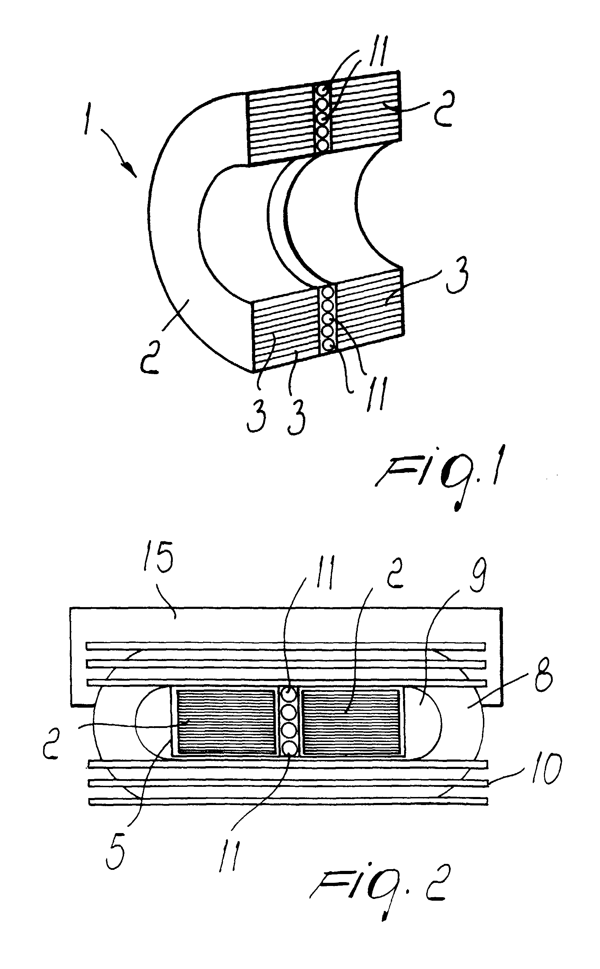

Figure 1 illustrates only two mutually spaced toroidal elements 2 for the sake of simplicity, but the length of the stator body is of course determined by the number of toroidal elements arranged axially side by side.

The ferromagnetic materials used, of the low-loss type, can be produced in narrow strips which are mutually packed so as to form the toroidal elements 2.

In Figure 1, the reference numeral 3 designates the plurality of strips of ferromagnetic material which can be mutually packed so as to form the toroidal elements 2; their side-by-side arrangement in an axial direction allows to provide stator cores of the chosen length.

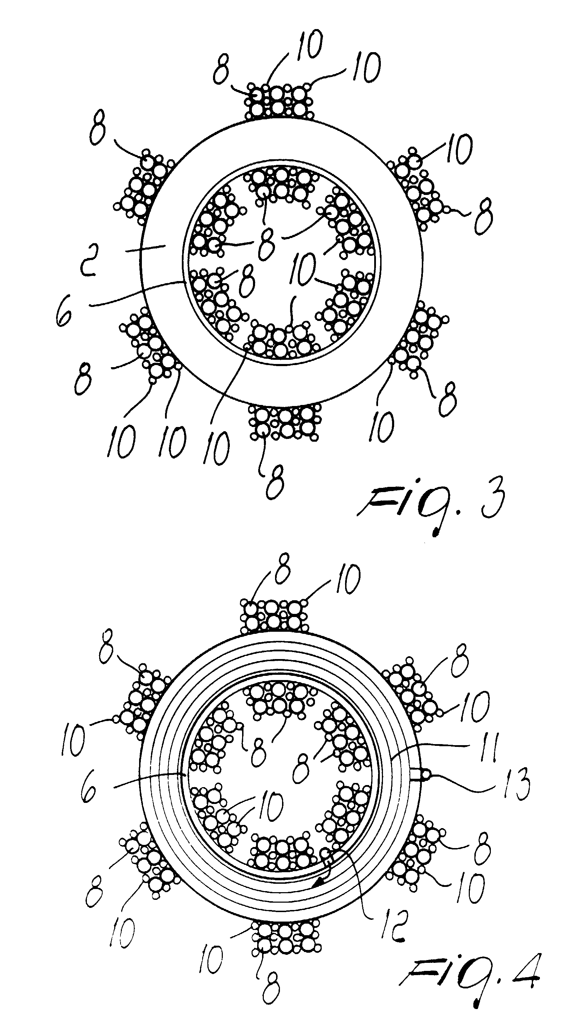

A casing 5, shown in Figure 2, is arranged around the material of the lamination that constitutes the toroidal elements 2. The casing 5 is preferably formed by a coat of paint on the ferromagnetic material in order to make it impermeable and by an insulating tape containing for example mica and is impregnated by means of a polymeric resin.

Preferably, there is also a supporting element (not shown) for the stator core which is typically made of a fiber-reinforced material so as to give further strength to the stator structure.

The windings of the stator, designated by the reference numeral 8, can be wrapped around the stator cores constituted by the toroidal elements 2. They can be protected against the sharp edges of said cores by means of a filler material 9 which is arranged at the curved portion that the windings have at the edges of the stator core.

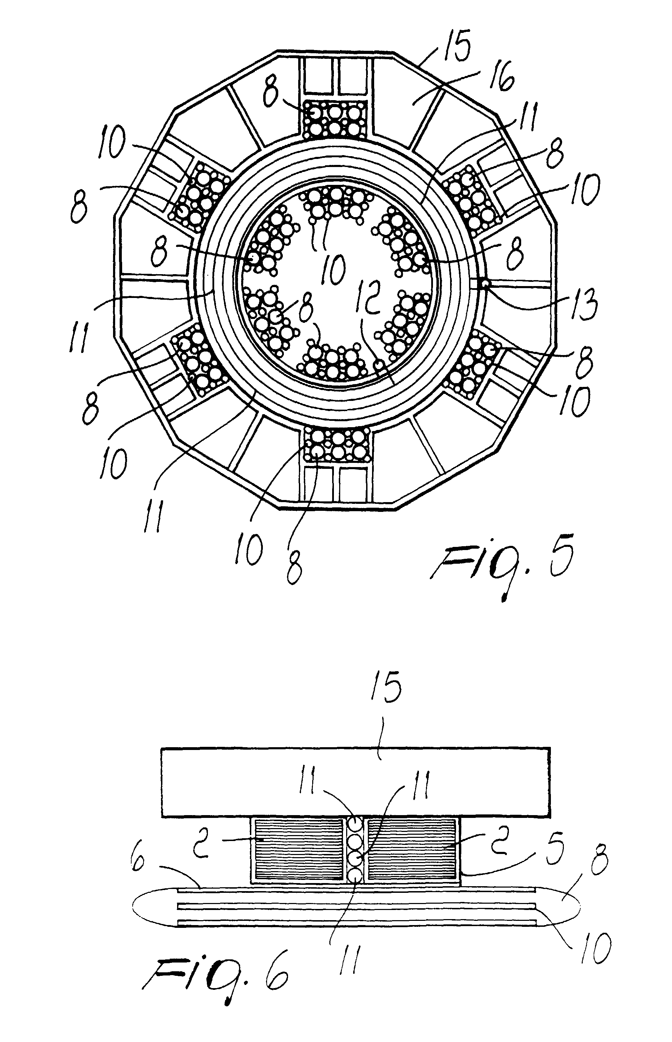

The stator windings 8 can be arranged either as shown in Figure 2, i.e., wound around the toroidal elements 2 of stator cores, or as shown in Figure 6, in which said windings are exclusively internal to the space formed between the toroidal elements 2.

The stator according to the invention can be also provided with a cooling system which can include a first cooling circuit, a second cooling circuit and a third cooling circuit or, as an alternative, one circuit chosen among the three.

In detail, a first cooling circuit can comprise a plurality of cooling tubes 10 which are arranged between the conductors that constitute the windings 8 of the stator core. This solution, as shown in Figures 2 to 6, allows to remove heat at the portions of the stator which generate most of said heat.

This avoids excessive overheating of the rotor arranged inside the stator. This solution is particularly advantageous if the rotor is of the type with permanent magnets which lose their magnetic properties if they are subjected to an excessive temperature.

The cooling tubes 10 have preferably an extremely small diameter so that they can be inserted between the conductors of the windings 8 and can be either arranged so as protrude only proximate to the surface of the stator that faces the rotor (not shown in the figures) or, as mentioned earlier, accommodated in the minimal spaces between one conductor and the other of the windings 8.

A second cooling circuit can comprise additional cooling tubes, typically wound in a spiral shape, which are interposed between the toroidal elements 2 and are designated by the reference numeral 11.

The inlet for the cooling fluid in the second cooling circuit formed by the tubes 11 can be arranged, for example, inside the stator core and can be designated by the reference numeral 12, while the outlet is arranged on the outer surface of the rotor and is designated by the reference numeral 13.

It is of course possible to swap the inlet with the outlet without thereby altering the cooling capacity of the second cooling circuit formed by the tubes 11. The inlet and the outlet can also be located on the same side, outside the stator, particularly if the cooling circuit has a single turn.

A third cooling circuit, designated by the reference numeral 15, comprises a metallic structure in which axial cooling ducts 16 are arranged; said structure can be arranged outside the toroidal elements 2 and also has spaces for accommodating any external conductors of the windings 8.

The third cooling circuit is therefore constituted by a sort of metal cage in which the stator I is accommodated.

In this way, the above-described stator allows to achieve very low losses and at the same time to have a stator of the chosen length by assembling a plurality of toroidal elements arranged axially side by side.

In practice it has been observed that the stator according to the invention fully achieves the intended aim, since it is obtained by using very low-loss materials with low costs and without being constrained in any way by the obtainable dimensions.

The stator according to the invention is particularly adapted for high-speed applications, since the currents involved generate higher losses at higher frequencies. Losses usually increase according to a quadratic relation and accordingly there is a particular need to minimize losses when the fundamental frequency can be very high.

Furthermore, the first, second and third cooling circuits, both considered individually and considered in combination, allow to remove the heat generated in the stator, to the full benefit of the functionality of said stator, particularly of the insulation system and of the ferromagnetic material used. Furthermore, additional beneficial results are achieved if the rotor is of the permanent-magnet type, particularly of the neodymium-iron-boron rare-earth type.

The stator thus conceived is susceptible of numerous modifications and variations, all of which are within the scope of the inventive concept; all the details may furthermore be replaced with other technically equivalent elements.

In practice, the materials employed, so long as they are compatible with the specific use, as well as the dimensions, may be any according to requirements and to the state of the art.

## Claims

1. A stator for high-speed radial-flux electrical machines, comprising a core and associated windings, characterized in that said core comprises a plurality of toroidal elements which are arranged axially side by side and are mutually spaced.

2. The stator according to claim 1, characterized in that each element of said plurality of toroidal elements is made of very low-loss laminated magnetic material.

3. The stator according to claim 2, characterized in that said laminated magnetic material comprises a NiFe ferromagnetic alloy with a Ni content from 35% to 50%.

4. The stator according to claim 2, characterized in that said magnetic material comprises nanocrystalline iron.

5. The stator according to claim 2, characterized in that said magnetic material comprises amorphous iron.

6. The stator according to claim 1, characterized in that each element of said plurality of toroidal elements is made of compressed very low-loss magnetic powders.

7. The stator according to claim 1, characterized in that said core furthermore comprises at least one cooling circuit.

8. The stator according to claim 1, characterized in that said core is enclosed in a casing, a supporting element being provided in order to support said toroidal elements.

9. The stator according to claim 1, characterized in that said windings are arranged inside said toroidal elements.

10. The stator according to claim 1, characterized in that said windings are arranged around said toroidal elements in an axial direction.

11. The stator according to claim 7, characterized in that said cooling circuit comprises a first cooling circuit constituted by cooling tubes arranged axially between the conductors that constitute said windings.

12. The stator according to claim 11, characterized in that said tubes that constitute said first cooling circuit have such a diameter as to make use of the minimal spaces provided between the conductors of said windings.

13. The stator according to claim 7, characterized in that said cooling circuit comprises a second cooling circuit which is constituted by cooling tubes wound in a spiral shape and arranged in the spaces between said toroidal elements.

14. The stator according to claim 13, characterized in that said second cooling circuit has a fluid inlet and a fluid outlet which are arranged at opposite surfaces of said toroidal elements.

15. The stator according to claim 7, characterized in that said cooling circuit comprises a third cooling circuit which is constituted by a metallic structure which is arranged outside said toroidal elements and internally forms seats for said windings and axial channels for the passage of a cooling fluid.
